# EUROPÄISCHE PATENTSCHRIFT

(11) **EP 3 221 607 B1**
(45) Veröffentlichungstag und Bekanntmachung des Hinweises auf die Patenterteilung: **17.10.2018**
(21) Anmeldenummer: 14806560.0
(22) Anmeldetag: 19.11.2014
(51) Int. Cl.: F16D 48/06, F16D 48/02

(54) **VERFAHREN ZUR REGELUNG EINES ISTDRUCKES EINER KUPPLUNG EINES KRAFTFAHRZEUGES**
METHOD FOR REGULATING AN ACTUAL PRESSURE OF A CLUTCH OF A MOTOR VEHICLE
PROCÉDÉ DE RÉGULATION D'UNE PRESSION RÉELLE D'UN EMBRAYAGE D'UN VÉHICULE AUTOMOBILE

(43) Veröffentlichungstag der Anmeldung: 27.09.2017
(73) Patentinhaber: GKN AUTOMOTIVE LTD., Redditch Worcestershire B98 0AJ (GB)
(72) Erfinder: LANGHANKI, Andreas, 47259 Duisburg (DE); PHAN, Khac Anh, 53757 Sankt Augustin (DE)
(74) Vertreter: Rössler, Matthias
(86) Internationale Anmeldenummer: PCT/EP2014/074959
(87) Internationale Veröffentlichungsnummer: WO 2016/078702

(56) Entgegenhaltungen:
- EP-A2- 2 725 252
- WO-A1-2006/047806
- DE-A1-102006 038 446
- DE-A1-102011 100 836

## Beschreibung

Die vorliegende Erfindung betrifft ein Verfahren zur Regelung eines Istdruckes bei einer (hydraulisch betätigbaren) Kupplung eines Kraftfahrzeuges.

Das Verfahren kann insbesondere in folgenden elektro-hydraulisch aktuierten Kupplungen eingesetzt werden:
- Kupplungen in Hinterachsmodulen (z. B. kann die Kupplung auf einer Seite des Differentials zwischen Seitenwellenrad und Seitenwelle integriert sein)
- Kupplungen in HangOn Systemen (im Antriebsstrang einer zuschaltbaren Achse)
- Kupplungen in sog. Disconnect Systemen (z. B. in Winkelgetrieben zur Abschaltung bzw. Stilllegung des dahinterliegenden Antriebsstranges)
- Kupplungen in sog. Torque Vectoring Systemen (z. B. bei Achsen, in denen das Differential durch zwei Kupplungen für die linke und rechte Seitenwelle ersetzt ist)
- Kupplungen in üblichen Sperrdifferenzial Systemen (z. B. als Quersperre in einem Hinterachsdifferenzial)

Die hier betrachtete Kupplung umfasst regelmäßig eine Mehrzahl von Kupplungsbelägen und eine Kupplungsfeder und ist mit einem hydraulischen Drucksystem verbunden, das zumindest eine Pumpe, einen Kupplungszylinder und einen Kupplungskolben aufweist. Das hydraulische Drucksystem ist geeignet, über die Pumpe eine hydraulische Flüssigkeit in den Kupplungszylinder zu fördern und den Kupplungskolben zu bewegen, so dass die Kupplungsbeläge gegen eine Kraft der Kupplungsfeder miteinander zur Anlage gebracht werden. In einem so genannten Greifpunkt der Kupplung ist ein Luftspiel überwunden und die Kupplungsbeläge sind miteinander in Anlage, wobei sich die Kraft des Kupplungskolbens und die Kraft der Kupplungsfeder gerade aufheben, so dass die Kupplungsbeläge ohne oder ohne wesentliche Anpresskraft aneinander anliegen. Ein weiteres Erhöhen des Drucks im Drucksystem bewirkt dann unmittelbar eine Bereitstellung einer Drehmomentkapazität der Kupplung, d. h. die Kupplung würde dann ein Drehmoment übertragen, z. B. von einer Antriebseinheit auf ein Getriebe.

In hydraulisch betätigten Kupplungen müssen die dort vorliegenden Arbeitsdrücke während des Betriebes möglichst genau eingestellt bzw. geregelt werden, so dass eine schnelle Umsetzung der aktuell geforderten Solldrücke und damit ein komfortabler Betrieb der Kupplung möglich ist.

Ein Verfahren zur Bestimmung eines Greifpunkts (dort Berührpunkt) einer Kupplung ist beispielsweise aus der DE 10 2011 089 031 A1 bekannt. Für einen verbesserten Betrieb der Kupplung wird dort vorgeschlagen, einen steuerungsseitig relevanten Greifpunkt zu bestimmen, der einen definierten Abstand zu einem Knickpunkt (d.h. dem Punkt, an dem der Übergang eines elastischen Kupplungsverhalten zu einem steifen Kupplungsverhalten erfolgt) aufweist. Dadurch wird das Ansprechverhalten der Kupplung deutlich reduziert und das Druckfolgeverhalten der Kupplung deutlich verbessert.

Zielvorgaben zur Reduzierung der Kosten für Kupplungen haben zu internen Überlegungen geführt, inwieweit indirekte Messverfahren eingesetzt werden können, z. B. durch Messungen des Motorstroms eines Elektromotors, der zum Antrieb der Pumpe des hydraulischen Drucksystems verwendet wird, um eine exakte Regelung des Betriebs der Kupplung - insbesondere unter Vermeidung eines Einsatzes von zusätzlicher Sensorik (z.B. ein Drucksensor) an der Kupplung - zu gewährleisten. Der benötigte Parameter Druck könnte so mittels geeigneter Methoden und Algorithmen bestimmt werden.

Darauf aufbauend wurden intensive und umfangreiche interne Prüfstandsversuche durchgeführt, die zu der Erkenntnis führten, dass die Übereinstimmung zwischen dem mittels indirekten Messverfahren bestimmten und dem tatsächlichen, mittels Drucksensoren gemessenen Druck bei größeren Drücken (Solldruck von 7 bis 40 bar) sehr hoch ist. Auch über einen Temperaturbereich von -20 °C [Grad Celsius] bis 100 °C konnte eine hohe Übereinstimmung festgestellt werden.

Es wurde aber auch festgestellt, dass bei niedrigen Solldrücken (unter 7 bar) die Übereinstimmung zwischen dem, durch Messung des Motorstroms des Elektromotors ermittelten und dem tatsächlichen, mittels Drucksensoren gemessenen Druck bei kleineren Drücken unzureichend ist. Als Ursache hierfür wurde dann nach sehr umfangreichen Auswerteanalysen identifiziert, das bei niedrigem Solldrücken keine (ausreichend) proportionale Relation zwischen dem Druck und dem Motorstrom des Elektromotors vorliegt. Störgrößen, wie z. B. mechanische Reibung und/oder hydraulische Verluste beeinflussen nämlich dann das Verhalten des hydraulischen Drucksystems signifikant. Dieses Verhalten verschlechtert sich vor allem auch bei kalten (ca. -20 °C) und sehr hohen Temperaturen (ca. 100 °C).

Aus der WO 2006/047806 A1 ist ein Verfahren zur Steuerung eines hydraulischen Aktuators einer Reibungskupplung bekannt. Der Aktuator umfasst eine Pumpe, die von einem Elektromotor angetrieben wird. In Abhängigkeit einer Differenz von Soll-Druck und Ist-Druck im Aktuatorzylinder werden verschiedene Regelalgorithmen zur Ansteuerung des Elektromotors ausgeführt.

Aufgabe der Erfindung ist es daher, die mit Bezug auf den Stand der Technik geschilderten und die intern identifizierten Probleme zumindest teilweise zu lösen und insbesondere ein Verfahren vorzuschlagen, durch das ein verbesserter Betrieb einer kostengünstigen Kupplung dadurch erreicht wird, dass eine genauere Regelung des Druckes (höhere Übereinstimmung zwischen dem Solldruck und dem geregelten Druck) realisierbar ist. Dies gilt insbesondere für hydraulische Drucksysteme und Kupplungen, in denen keine unmittelbare Messung des Istdruckes durch einen Drucksensor erfolgt, sondern in denen der Istdruck durch indirekte Messverfahren (z. B. durch Messen des Motorstroms des für den Antrieb der Pumpe eingesetzten Elektromotors) bestimmt wird.

Diese Aufgaben werden gelöst mit einem Verfahren gemäß den Merkmalen des Patentanspruchs 1. Weitere vorteilhafte Ausgestaltungen des Verfahrens sind in den abhängigen Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierfür wird ein Verfahren zur Regelung eines Istdruckes einer Kupplung eines Kraftfahrzeuges vorgeschlagen. Die Kupplung weist eine Mehrzahl von Kupplungsbelägen und eine Kupplungsfeder auf und ist mit einem hydraulischen Drucksystem verbunden, das zumindest eine Pumpe, einen Kupplungszylinder und einen Kupplungskolben aufweist. Die Pumpe wird über einen Elektromotor angetrieben. Das hydraulische Drucksystem ist geeignet, über die Pumpe eine hydraulische Flüssigkeit in den Kupplungszylinder zu fördern und den Kupplungskolben zu bewegen, so dass die Kupplungsbeläge gegen eine Kraft der Kupplungsfeder miteinander zur Anlage gebracht werden. Für diese Kupplungen umfasst das Verfahren zumindest die folgenden, nacheinander durchzuführenden Schritte:
a) Bereitstellen eines Wertes für einen Solldruck, der im Kupplungszylinder vorliegen soll;
b) Befüllen des Kupplungszylinders mit der hydraulischen Flüssigkeit zum Erreichen des Solldruckes;
c) wobei
   - falls der Solldruck zwischen 0 und 7 bar beträgt, der Istdruck im Kupplungszylinder durch eine Regelung einer Drehzahl der Pumpe bzw. des Elektromotors eingestellt wird; und
   - falls der Solldruck mehr als 7 bar beträgt, der Istdruck im Kupplungszylinder durch eine Regelung eines Motorstroms des Elektromotors eingestellt wird;
d) Regelung des Istdruckes bis der Solldruck erreicht ist.

Als Pumpe wird bevorzugt eine Zahnradpumpe mit einer Förderleistung von 1ml/Umdrehung [Milliliter pro Umdrehung) verwendet. Andere Pumpenausführungen wie z. B. Gerotorpumpe, Planetenrotorpumpe usw. sind möglich. Der Motorstrom beträgt insbesondere bis zu 40 Ampere.

Es wird hier zwischen zwei verschiedenen Regelverfahren des Istdruckes in der Kupplung, bzw. im hydraulischen Drucksystem unterschieden: Bei einem (vorgegebenen bzw. gewünschten) Solldruck bis maximal 7 bar erfolgt die Regelung des Istdruckes (nur) durch die Regelung der Drehzahl der Pumpe des hydraulischen Systems bzw. durch die Regelung der Drehzahl des Elektromotors. Bei einem (vorgegebenen bzw. gewünschten) Solldruck von mehr als 7 bar wird eine Regelung durchgeführt, wonach der Istdruckes (nur) unter Berücksichtigung des elektrischen Motorstroms des Elektromotors des hydraulischen Systems reguliert wird. Es hat sich herausgestellt, dass bei geringerem Solldrücken eine höhere Übereinstimmung zwischen Solldruck und geregeltem Istdruck vorliegt, wenn die Drehzahl der Pumpe/des Elektromotors (also die Fördermenge der hydraulischen Flüssigkeit) als Messwert herangezogen wird.

In einem Greifpunkt der Kupplung ist ein Luftspiel überwunden und die Kupplungsbeläge sind in Anlage miteinander, wobei ein weiteres Erhöhen des Drucks im Drucksystem unmittelbar eine Bereitstellung einer Drehmomentkapazität der Kupplung bewirken würde.

Insbesondere wird vorgeschlagen, dass in Schritt a) ein Wert für den Solldruck bereitgestellt wird, der die Bereitstellung einer Drehmomentkapazität der Kupplung bewirken würde, der also einen Wert aufweist, bei dem der Greifpunkt der Kupplung bereits erreicht ist.

Bevorzugt wird (insbesondere zusätzlich zur vorgenannten Variante) vorgeschlagen, dass in Schritt b) der Kupplungszylinder mit der hydraulischen Flüssigkeit befüllt wird, wobei der Greifpunkt der Kupplung erreicht und überschritten wird.

Es wird also in jedem Fall ein Istdruck erreicht, bei dem der Greifpunkt der Kupplung sicher erreicht ist.

Insbesondere wird (dann auch noch) in Schritt c), falls der Solldruck zwischen 1,5 und 7 bar, insbesondere zwischen 2,5 und 7 bar, beträgt, der Istdruck im Kupplungszylinder durch eine Regelung einer Drehzahl der Pumpe/des Elektromotors eingestellt.

Durch die vorstehenden bevorzugten Ausprägungen der Verfahrensschritte a), b) und c) wird insbesondere eine hohe Übereinstimmung zwischen Solldruck und Istdruck auch bei niedrigen Solldrücken erreicht. Damit ist ein komfortabler und verschleißarmer Betrieb der Kupplung möglich.

Gemäß einer bevorzugten Ausgestaltung des Verfahrens wird nach dem Abschalten einer Zündung des Kraftfahrzeuges in einem Nachlauf die Pumpe/ der Elektromotor wie folgt betrieben:
i. zunächst mit einer konstanten Drehzahl und nachfolgend
ii. mit einem konstanten Motorstrom des Elektromotors,
wobei während der Phasen i. und ii. jeweils die auftretenden Werte der weiteren Parameter Motorstrom und Drehzahl ermittelt und diese für Schritt c) berücksichtigt werden. Dies erfolgt in der Art, dass eine bessere Übereinstimmung zwischen Solldruck und geregeltem Istdruck erreicht wird (durch Identifikation der Charakteristik des hydraulischen Systems, z.B. Anpassungen der Druck - Strom oder Druck - Drehzahlkennlinie).

Durch den Betrieb in Phase i. kann die für jedes hydraulische System individuell vorliegende hydraulische Leckage zumindest näherungsweise bestimmt werden. Durch den Betrieb in Phase ii. kann der mechanische Wirkungsgrad (Reibkräfte usw.) näherungsweise bestimmt werden. Infolge der Einbeziehung der so erhaltenden Informationen kann die Genauigkeit der Regelung des Istdruckes weiter verbessert werden.

Es wird weiterhin ein Kraftfahrzeug mit einer Antriebseinheit, einem Getriebe und mindestens einer Kupplung vorgeschlagen, wobei die Kupplung eine Mehrzahl von Kupplungsbelägen und eine Kupplungsfeder aufweist und mit einem hydraulischen Drucksystem verbunden ist, das zumindest eine Pumpe, einen Kupplungszylinder und einen Kupplungskolben aufweist. Die Pumpe wird über einen Elektromotor angetrieben. Das hydraulische Drucksystem ist geeignet, über die Pumpe eine hydraulische Flüssigkeit in den Kupplungszylinder zu fördern und den Kupplungskolben zu bewegen, so dass die Kupplungsbeläge gegen eine Kraft der Kupplungsfeder miteinander zur Anlage gebracht werden, wobei eine Steuerung vorgesehen und dazu eingerichtet ist, die Kupplung nach dem hier vorgeschlagenen Verfahren zu betreiben.

Die Erfindung und das technische Umfeld werden nachfolgend anhand der Figuren näher erläutert. Es ist darauf hinzuweisen, dass die Figuren besonders bevorzugte Ausführungsvarianten der Erfindung zeigen, auf die sie jedoch nicht beschränkt sind. Für gleiche Gegenstände werden in den Figuren auch gleiche Bezugszeichen verwendet. Es zeigen schematisch:
- Fig. 1:: ein Kraftfahrzeug mit einer Kupplung;
- Fig. 2:: ein Diagramm zur Verdeutlichung der Erfindung; und
- Fig. 3:: ein Diagramm zur Darstellung des Zusammenhangs zwischen Istdruck und Motorstrom.

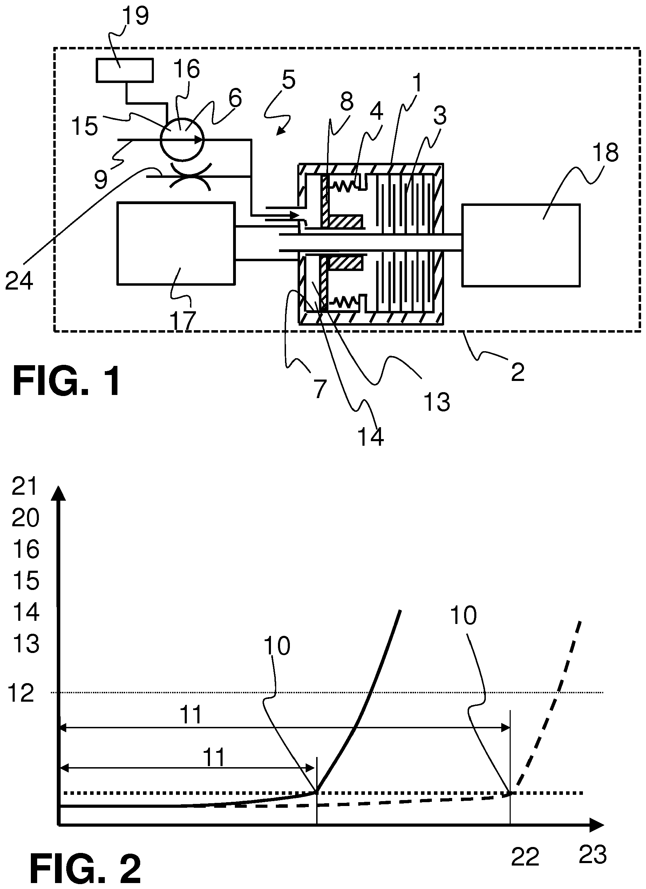

Fig.1 zeigt ein Kraftfahrzeug 2 mit einer Antriebseinheit 17, einem Getriebe 18 und, wie hier gezeigt, einer einzelnen Kupplung 1. Die Kupplung 1 weist eine Mehrzahl von Kupplungsbelägen 3 und eine Kupplungsfeder 4 auf und ist mit einem hydraulischen Drucksystem 5 verbunden, das zumindest eine Pumpe 6, einen Kupplungszylinder 7 und einen Kupplungskolben 8 aufweist, wobei das hydraulische Drucksystem 5 geeignet ist, über die Pumpe 6 eine hydraulische Flüssigkeit 9 in den Kupplungszylinder 7 zu fördern und den Kupplungskolben 8 zu bewegen, so dass die Kupplungsbeläge 3 gegen eine Kraft der Kupplungsfeder 4 miteinander zur Anlage gebracht werden. Sind die Kupplungsbeläge 3 zur Anlage miteinander gebracht (Greifpunkt 10), wird ein Drehmoment der Antriebseinheit 17 auf das Getriebe 18 übertragen. Das hydraulische Drucksystem 5 weist eine Leckage 24 auf.

Das hydraulische Drucksystem 5 ist mit einer Steuerung 19 verbunden. Die Steuerung 19 regelt und überwacht Drehzahl 15 der Pumpe 6/ des Elektromotors 25 und Motorstrom 16 des Elektromotors 25. Der geforderte Solldruck 13 in der Kupplung 1 wird durch die Steuerung 19 eingestellt. Dabei wird die Drehzahl 15 der Pumpe 6/ des Elektromotors 25 und/oder der Motorstrom 16 des Elektromotor 25 so geregelt, dass der Istdruck 14 in der Kupplung 1 möglichst dem Solldruck 13 entspricht.

Fig. 2 zeigt ein Diagramm zur Verdeutlichung der Erfindung. Darin ist für zwei verschiedene Kupplungen 1 mit unterschiedlichem Luftspiel 11 jeweils der Verlauf der Parameter Motorstrom 16, Drehmoment 20 und Druck 21 über dem Weg 22 bzw. dem Volumen 23 aufgetragen. Weg 22 bzw. Volumen 23 bezeichnen den Weg des Kupplungskolbens 8 bzw. das in den Kupplungszylinder 7 beförderte Volumen 23 der hydraulischen Flüssigkeit 9. Zu erkennen ist, dass nach einem bestimmten Weg 22 bzw. Volumen 23 das Luftspiel 11 der Kupplung 1 überwunden ist und die Kupplungsbeläge 3 in Anlage gebracht sind, so dass der Greifpunkt 10 erreicht ist. Ab diesem Punkt steigt die Kurve steil an (also die Werte für Drehzahl 15, Motorstrom 16, Drehmoment 20 und Druck 21 bzw. Istdruck 14). Ein weiteres Erhöhen des Drucks 21 im Drucksystem 5 würde dann unmittelbar eine Bereitstellung eines Drehmoments 20 der Kupplung 1 bewirken, d. h. die Kupplung 1 würde ein Drehmoment 20 einer Antriebseinheit 17 auf ein Getriebe 18 übertragen.

Soll nun ein Solldruck 13 mit einem Wert 12 in der Kupplung 1 bereitgestellt werden, so wird erfindungsgemäß unterschieden, ob der Wert 12 einen bestimmten Wert 12 übersteigt. Davon abhängig wird der Istdruck 14 in der Kupplung 1 durch die Pumpe 6 bzw. durch den Elektromotor 25 auf unterschiedliche Weise geregelt. Ist der Wert 12 kleiner als 7 bar, so wird der Istdruck 14 im Kupplungszylinder 7 durch eine Regelung der Drehzahl 15 der Pumpe 6/ des Elektromotors 25 eingestellt. Beträgt der Wert 12 7 bar oder mehr, wird der Istdruck 14 im Kupplungszylinder durch eine Regelung des Motorstroms 16 des Elektromotors 25 eingestellt.

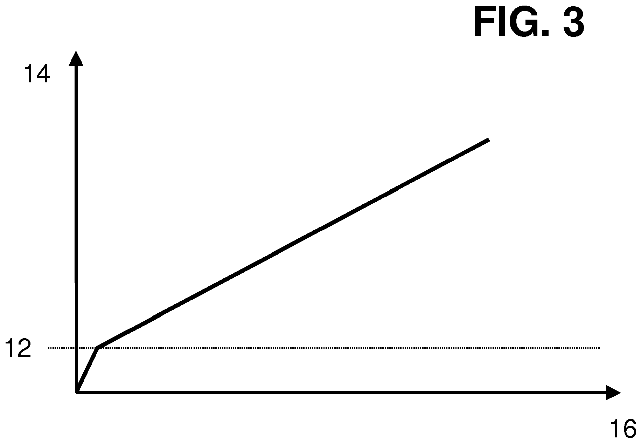

Fig. 3 zeigt ein Diagramm zur Darstellung des Zusammenhangs zwischen Istdruck 14 und Motorstrom 16. Ab einem gewissen Wert 12 des Istdruckes 14 (hier über 7 bar) ist der Zusammenhang zwischen Istdruck 14 und Motorstrom 16 linear und weist einen gleichbleibenden Verlauf auf. Entsprechend kann der Istdruck 14 durch Einstellung des Motorstroms 16 genau eingestellt werden.

### Bezugszeichenliste

- 1: Kupplung
- 2: Kraftfahrzeug
- 3: Kupplungsbelag
- 4: Kupplungsfeder
- 5: hydraulisches Drucksystem
- 6: Pumpe
- 7: Kupplungszylinder
- 8: Kupplungskolben
- 9: hydraulische Flüssigkeit
- 10: Greifpunkt
- 11: Luftspiel
- 12: Wert
- 13: Solldruck
- 14: Istdruck
- 15: Drehzahl
- 16: Motorstrom
- 17: Antriebseinheit
- 18: Getriebe
- 19: Steuerung
- 20: Drehmoment
- 21: Druck
- 22: Weg
- 23: Volumen
- 24: Leckage
- 25: Elektromotor

## Patentansprüche

1. Verfahren zur Regelung eines Istdruckes (14) einer Kupplung (1) eines Kraftfahrzeuges (2), wobei die Kupplung (1) eine Mehrzahl von Kupplungsbelägen (3) und eine Kupplungsfeder (4) aufweist und mit einem hydraulischen Drucksystem (5) verbunden ist, das zumindest eine, durch einen Elektromotor (25) angetriebene Pumpe (6), einen Kupplungszylinder (7) und einen Kupplungskolben (8) aufweist, wobei das hydraulische Drucksystem (5) geeignet ist, über die Pumpe (6) eine hydraulische Flüssigkeit (9) in den Kupplungszylinder (7) zu fördern und den Kupplungskolben (8) zu bewegen, so dass die Kupplungsbeläge (3) gegen eine Kraft der Kupplungsfeder (4) miteinander zur Anlage gebracht werden, umfassend zumindest die folgenden, nacheinander durchzuführenden Schritte:
a) Bereitstellen eines Wertes (12) für einen Solldruck (13), der im Kupplungszylinder (7) vorliegen soll;
b) Befüllen des Kupplungszylinders (7) mit der hydraulischen Flüssigkeit (9) zum Erreichen des Solldruckes (13);
**dadurch gekennzeichnet, dass**
c)
- falls der Solldruck (13) zwischen 0 und 7 bar beträgt, ein Istdruck (14) im Kupplungszylinder (7) durch eine Regelung einer Drehzahl (15) der Pumpe (6) oder des Elektromotors (25) eingestellt wird; und
- falls der Solldruck (13) mehr als 7 bar beträgt, der Istdruck (14) im Kupplungszylinder (7) durch eine Regelung eines Motorstroms (16) des Elektromotors (25) eingestellt wird;
d) Regelung des Istdruckes (14) bis der Solldruck (13) erreicht ist.

2. Verfahren nach Patentanspruch 1, wobei in einem Greifpunkt (10) der Kupplung (1) ein Luftspiel (11) überwunden ist und die Kupplungsbeläge (3) in Anlage sind und ein weiteres Erhöhen des Drucks im Drucksystem (5) unmittelbar eine Bereitstellung einer Drehmomentkapazität der Kupplung (1) bewirken würde, wobei der in Schritt a) bereitgestellte Wert (12) für den Solldruck (13) die Bereitstellung einer Drehmomentkapazität der Kupplung (1) bewirken würde und in Schritt b) der Kupplungszylinder (7) mit der hydraulischen Flüssigkeit (9) befüllt wird, so dass der Greifpunkt (10) der Kupplung (1) erreicht und überschritten wird; wobei in Schritt c), falls der Solldruck (13) zwischen 1,5 und 7 bar beträgt, der Istdruck (14) im Kupplungszylinder (7) durch eine Regelung einer Drehzahl (15) der Pumpe (6) oder des Elektromotors (25) eingestellt wird.

3. Verfahren nach einem der Patentansprüche 1 oder 2, wobei nach dem Abschalten einer Zündung des Kraftfahrzeuges (2) in einem Nachlauf die Pumpe (6) oder der Elektromotor (25) wie folgt betrieben wird:
i. zunächst mit einer konstanten Drehzahl (15) und nachfolgend
ii. der Elektromotor (25) mit einem konstanten Motorstrom (16),
wobei während der Phasen i. und ii. jeweils die auftretenden Werte der weiteren Parameter Motorstrom (16), Drehzahl (15) ermittelt und diese für Schritt c) berücksichtigt werden.

4. Kraftfahrzeug (2) mit einer Antriebseinheit (17), einem Getriebe (18) und mindestens einer Kupplung (1), wobei die Kupplung (1) eine Mehrzahl von Kupplungsbelägen (3) und eine Kupplungsfeder (4) aufweist und mit einem hydraulischen Drucksystem (5) verbunden ist, das zumindest eine, durch einen Elektromotor (25) angetriebene Pumpe (6), einen Kupplungszylinder (7) und einen Kupplungskolben (8) aufweist, wobei das hydraulische Drucksystem (5) geeignet ist, über die Pumpe (6) eine hydraulische Flüssigkeit (9) in den Kupplungszylinder (7) zu fördern und den Kupplungskolben (8) zu bewegen, so dass die Kupplungsbeläge (3) gegen eine Kraft der Kupplungsfeder (4) miteinander zur Anlage gebracht werden, wobei eine Steuerung (19) vorgesehen und dazu eingerichtet ist, die Kupplung (1) nach einem Verfahren gemäß der vorhergehenden Patentansprüche zu betreiben.

## Claims

1. Method for regulating an actual pressure (14) of a clutch (1) of a motor vehicle (2), the clutch (1) having a plurality of clutch linings (3) and a clutch spring (4), and being connected to a hydraulic pressure system (5) which has at least one pump (6) which is driven by way of an electric motor (25), a clutch cylinder (7) and a clutch piston (8), the hydraulic pressure system (5) being suitable for delivering a hydraulic fluid (9) into the clutch cylinder (7) via the pump (6) and for moving the clutch piston (8), with the result that the clutch linings (3) are brought into contact with one another counter to a force of the clutch spring (4), comprising at least the following steps which are to be carried out after one another:
a) provision of a value (12) for a setpoint pressure (13) which is to prevail in the clutch cylinder (7);
b) filling of the clutch cylinder (7) with the hydraulic fluid (9) in order to reach the setpoint pressure (13);
**characterized in that**
c)
- if the setpoint pressure (13) is between 0 and 7 bar, an actual pressure (14) in the clutch cylinder (7) being set by way of a regulation of rotational speed (15) of the pump (6) or the electric motor (25); and
- if the setpoint pressure (13) is more than 7 bar, the actual pressure (14) in the clutch cylinder (7) being set by way of a regulation of a motor current (16) of the electric motor (25);
d) regulation of the actual pressure (14) until the setpoint pressure (13) is reached.

2. Method as claimed in claim 1, an air gap (11) being overcome at a grip point (10) of the clutch (1), and the clutch linings (3) being in contact; and a further increase in the pressure in the pressure system (5) would directly bring about a provision of a torque capacity of the clutch (1), and the value (12) for the setpoint pressure (13) which is provided in step a) would bring about the provision of a torque capacity of the clutch (1), and the clutch cylinder (7) being filled with the hydraulic fluid (9) in step b), with the result that the grip point (10) of the clutch (1) is reached and exceeded; in step c), if the setpoint pressure (13) is between 1.5 and 7 bar, the actual pressure (14) in the clutch cylinder (7) being set by way of a regulation of a rotational speed (15) of the pump (6) or the electric motor (25).

3. Method as claimed in either of claims 1 and 2, the pump (6) or the electric motor (25) being operated as follows after an ignition of the motor vehicle (2) is switched off during a follow-up time:
i. first of all at a constant rotational speed (15), and subsequently
ii. the electric motor (25) being operated with a constant motor current (16),
in each case the values of the further parameters which occur of motor current (16) and rotational speed (15) being determined during the phases i. and ii., and said values being taken into consideration for step c).

4. Motor vehicle (2) having a drive unit (17), a transmission (18) and at least one clutch (1), the clutch (1) having a plurality of clutch linings (3) and a clutch spring (4), and being connected to a hydraulic pressure system (5) which has at least one pump (6) which is driven by way of an electric motor (25), a clutch cylinder (7) and a clutch piston (8), the hydraulic pressure system (5) being suitable for delivering a hydraulic fluid (9) into the clutch cylinder (7) via the pump (6) and for moving the clutch piston (8), with the result that the clutch linings (3) are brought into contact with one another counter to a force of the clutch spring (4), a controller (19) being provided and set up for operating the clutch (1) in accordance with a method as claimed in the preceding claims.

## Revendications

1. Procédé de réglage d'une pression réelle (14) d'un embrayage (1) d'un véhicule automobile (2), l'embrayage (1) présentant une pluralité de garnitures d'embrayage (3) et un ressort d'embrayage (4), et étant connecté à un système de pression hydraulique (5) qui présente au moins une pompe (6) entraînée par un moteur électrique (25), un cylindre d'embrayage (7) et un piston d'embrayage (8), le système de pression hydraulique (5) étant apte à refouler par le biais de la pompe (6) un liquide hydraulique (9) dans le cylindre d'embrayage (7) et à déplacer le piston d'embrayage (8) de telle sorte que les garnitures d'embrayage (3) soient amenées en appui les unes contre les autres à l'encontre d'une force du ressort d'embrayage (4), comprenant au moins les étapes suivantes devant être effectuées successivement :
a) fourniture d'une valeur (12) pour une pression de consigne (13) qui doit s'appliquer à l'intérieur du cylindre d'embrayage (7) ;
b) remplissage du cylindre d'embrayage (7) avec le liquide hydraulique (9) pour atteindre la pression de consigne (13) ;
**caractérisé en ce que**
c)
- si la pression de consigne (13) est comprise entre 0 et 7 bar, une pression réelle (14) dans le cylindre d'embrayage (7) est ajustée par réglage d'une vitesse de rotation (15) de la pompe (6) ou du moteur électrique (25) ; et
- si la pression de consigne (13) est supérieure à 7 bar, la pression réelle (14) dans le cylindre d'embrayage (7) est ajustée par un réglage d'un courant de moteur (16) du moteur électrique (25) ;
d) réglage de la pression réelle (14) jusqu'à l'obtention de la pression de consigne (13).

2. Procédé selon la revendication 1, dans lequel, au niveau d'un point d'attaque (10) de l'embrayage (1), un jeu (11) est surmonté et les garnitures d'embrayage (3) sont en appui, et une augmentation supplémentaire de la pression dans le système de pression (5) provoquerait immédiatement une fourniture d'une capacité de couple de l'embrayage (1), la valeur (12) fournie à l'étape a) pour la pression de consigne (13) provoquerait la fourniture d'une capacité de couple de l'embrayage (1) et à l'étape b) le cylindre d'embrayage (7) est rempli de liquide hydraulique (9), de telle sorte que le point d'attaque (10) de l'embrayage (1) soit atteint et dépassé ; à l'étape c), si la pression de consigne (13) est comprise entre 1,5 et 7 bar, la pression réelle (14) dans le cylindre d'embrayage (7) est ajustée par un réglage d'une vitesse de rotation (15) de la pompe (6) ou du moteur électrique (25).

3. Procédé selon l'une quelconque des revendications 1 ou 2, dans lequel, après la coupure d'un allumage du véhicule automobile (2), dans une marche à vide subséquente, la pompe (6) ou le moteur électrique (25) sont actionnés comme suit :
i. d'abord avec une vitesse de rotation constante (15) puis
ii. le moteur électrique (25) avec un courant de moteur constant (16),
les valeurs des autres paramètres, à savoir du courant de moteur (16), de la vitesse de rotation (15), survenant pendant les phases i. et ii. étant à chaque fois déterminées et étant prises en compte pour l'étape c).

4. Véhicule automobile (2) comprenant une unité d'entraînement (17), une boîte de vitesses (18) et au moins un embrayage (1), l'embrayage (1) présentant une pluralité de garnitures d'embrayage (3) et un ressort d'embrayage (4) et étant connecté à un système de pression hydraulique (5) qui présente au moins une pompe (6) entraînée par un moteur électrique (25), un cylindre d'embrayage (7) et un piston d'embrayage (8), le système de pression hydraulique (5) étant apte à refouler par le biais de la pompe (6) un liquide hydraulique (9) dans le cylindre d'embrayage (7) et à déplacer le piston d'embrayage (8) de telle sorte que les garnitures d'embrayage (3) soient amenées en appui les unes contre les autres à l'encontre d'une force du ressort d'embrayage (4), une commande (19) étant prévue et adaptée pour entraîner l'embrayage (1) par un procédé selon l'une quelconque des revendications précédentes.
